# EUROPEAN PATENT SPECIFICATION

(11) **EP 1 472 769 B1**
(45) Date of publication and mention of the grant of the patent: **12.10.2005**
(21) Application number: 03743081.6
(22) Date of filing: 16.01.2003
(51) Int. Cl.: H02G 3/06, H02G 3/04

(54) **CONNECTING ELEMENT**
VERBINDUNGSTEIL
ELEMENT DE CONNEXION

(30) Priority: 30.01.2002 NL 1019863
(43) Date of publication of application: 03.11.2004
(73) Proprietor: Gouda Holland B.V., 2851 AW Haastrecht (NL)
(72) Inventor: BOER, Dirk, René, NL-2851 VS Haastrecht (NL)
(74) Representative: Hoorweg, Petrus Nicolaas
(86) International application number: PCT/NL2003/000027
(87) International publication number: WO 2003/073575

(56) References cited:
- EP-A- 0 409 807
- DE-U- 9 104 301
- US-A- 3 404 706

## Description

The invention relates to a connecting element for cable ducts according to the pre-amble of claim 1.

Connecting elements for cable ducts are generally known. A known connecting element for cable ducts comprises a housing with a base, at least two side walls standing from the base such that at least one holder and at least two mouths are formed, wherein the holder is suitable for receiving cables and close to the mouth the connecting element also comprises engaging means which can engage on a cable duct.

From EP 0 409 807 a multifunctional connection element is known. It comprises a house with side-walls and mouths for receiving cables. Each mouth can be closed using a plate connected with screws engaging in holes near the mouth of the connection element. The plate is replaced by a coupling device is that mouth is to be connected to a duct.

US-A-3 404 706 discloses a duct system employing a connection element. The connection element has upstanding angled legs. The mouths formed between the legs can be closed by plates. A separate coupling element is used for making a connection between a mouth and a cable duct.

In the prior art a connecting element itsel is only suitable for one purpose, for instance to lead cables round a bend.

The object of the invention is to provide a multifunctional connecting element which is more readily adaptable then prior art.

This object is achieved with the connecting element according to the invention, wherein the engaging means are also adapted to engage on a closing means. It is hereby possible to close a mouth of the connecting element, whereby this mouth does not have to be used and no access can be provided to the cables from the outside via this mouth without the need for replacement. By placing such a connecting element between at least two cable duct elements, wherein one or more mouths are closed, a cable duct system is created which can be readily modified at a later point in time. It is possible to open the mouth which has been closed, whereby a new cable duct element can be connected to this mouth. The connecting element according to the invention is therefore highly suitable for the present, increasingly more complex cable duct systems which are often intended for later extension.

The connecting element preferably has at least two mouth surfaces, wherein the mouth surfaces from a mutual angle. It is hereby possible to receive cables in the connecting element and to lead the cables round a corner. The connecting element is then used as a component for constructing a cable duct system.

In the preferred embodiment the connecting element comprises at least four standing side walls and at least four mouths. The mouths are distributed uniformly and form the corner points of a cross. A connecting element is hereby formed in the shape of a cross. Closing two adjacent mouths creates a connecting element which has a bend of 90°. Closing two opposite mouths creates a connecting element which can connect two cable ducts in a continuous line. It is also possible to close only one mouth. A T-shaped connecting element is hereby created.

The closing means preferably comprise engaging means for receiving a closing element. A closing element can thus be engaged and removed in simple manner.

The engaging means of the connecting element preferably comprise clamping means. Both the cable duct and the closing element can be engaged by clamps. Clamping engagement is efficient with an eye to the assembly time for cable duct systems.

According to a further development the engaging means of the connecting element comprise a recess. A part of the edge of the cable duct respectively the closing element can hereby be received and herein be clampingly engaged in the recess.

The engaging means are preferably embodied such that they can engage a cable duct, wherein the cable duct is free of engaging means. Connection is hereby accelerated, in particular when use is made of a snap connection between connecting elements and a cable duct.

The engaging means are preferably suitable for receiving a cable duct which has been machined in non-metal removing manner. The cable duct machined in non-metal removing manner can be machined at a work location, for instance made to length, and then be engaged close to the mouth.

According to a particular embodiment the connecting element comprises guide means for guiding cables. Cables are received in the connecting element, wherein a specific corner or bend is formed. In a preferred embodiment a guide means is formed by a side wall placed between two mouths of a connecting element, wherein the mouths do not lie in the same plane. The side of the side walls which is directed toward the inside of the connecting element defines an arc of a determined minimum outer circumference. The cables which run through both mouths of the connecting element and form a particular bend are guided along the guide means, wherein the bend progresses gradually, and particularly in a circle, around a determined centre. The chosen radius can be related to the fragility of the received cable, particularly the flexibility and bendability of unprotected glass fibre cables in particular, such that the cable cannot break as a result of too sharp an angle. A guide means is preferably used which has a radius greater than 50 mm.

The engaging means of at least two mouths of the connecting element are preferably connected to each other in electrically conducting manner. A cable duct system can hereby be assembled which is electrically conductive. This provides particular advantages for cable ducts accommodating unprotected glass fibre cables.

It is advantageous to injection mould the connecting element. This provides particular advantages in the manufacture, and injection moulding of the connecting element moreover prevents the forming of sharp edges whereby the received cables can be damaged. In the preferred embodiment the connecting element is however assembled from a base plate and four electrically conductive extruded side wall profiles. The side wall profiles can hereby also be used as guide means and electrically conductive means.

In the preferred embodiment the side wall is formed by a connecting part which has a pillow-shaped profile. The pillow-shaped profile, constructed by extrusion, forms the guide means for cables. In addition, the connecting element is embodied in the same manner in each case.

The connecting element according to the invention is preferably embodied with a cover. The received cables, in particular glass fibre cables, can hereby be protected against outside influences. The cover is preferably connected to the connecting element by means of a hinge. The cover can be pivoted open.

The cover preferably comprises two hinge means which are arranged on the opposite standing side walls of the connecting element. The hinge means is adapted such that the cover can pivot about both pivot points, i.e. about two pivot axes, whereby the cover can open to two sides.

A cable duct which can be engaged by the connecting element according to the invention comprises an end which has been machined in non-metal removing manner and which is free of engaging means. This is a cable duct embodied in a particularly simple manner. This results in a considerable cost-saving.

The invention will be further described on the basis of the annexed drawings, in which:
Figure 1 shows a perspective view of a cable duct system in which connecting elements according to the invention are applied,
Figure 2 shows a top view of a narrowing piece according to the invention,
Figure 3 shows a perspective view of the structure of a connecting element according to the invention,
Figure 4 shows a perspective view of a connecting element according to the invention embodied as 90° bend,
Figure 5 is a perspective view of a connecting element according to the invention embodied as T-connection, and
Figure 6 is a perspective view of a connecting element according to the invention with cover embodied as cross connection.

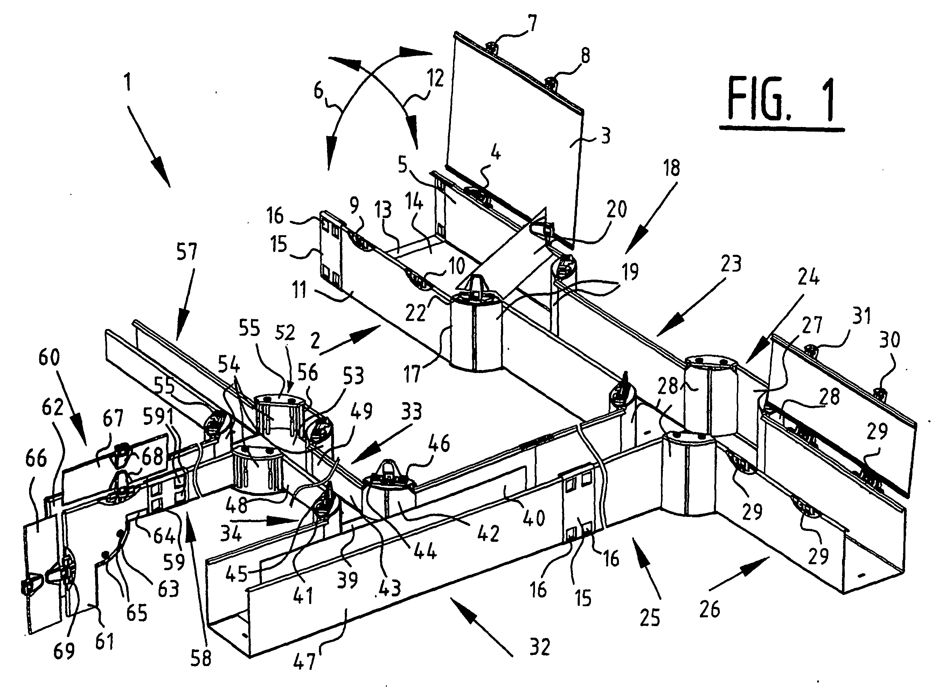

Figure 1 shows a cable duct system 1. Shown is a first U-shaped, elongate cable duct 2 which is provided with a cover 3. The cover 3 can pivot about a hinge 4. Cable duct 2 is provided with four hinges 4. The hinge 4 is arranged on standing wall 5 of duct 2 and engages on cover 3. The cover moves as according to arrow 6.

Hinge 4 is assembled from a clamping part 7,8 and a shaft part 9,10. In this embodiment the clamping part 7,8 is connected to cover 3 and shafts 9,10 are connected to standing wall 5,11. Clamps 7,8 engage on shaft 9,10 such that the cover can perform a pivoting movement around this shaft. In the closed position of the cover the clamps 7,8 engage on shafts 9,10. Cover 3 can pivot according to arrow 6 when hinge 4 forms the pivot axis, and cover 3 can pivot according to arrow 12 when shafts 9,10 form the pivot axis.

The U-shaped profile of cable duct 2 comprises two side walls 5,11 and a base 13. The base serves as support for cables (not shown) which can be received in the cable duct. Cable duct 2 thus forms a holder.

Cable duct 2 has two outer ends, including the edge 14. The edge 14 forms a mouth of cable duct 2. A connecting element 15 can engage close to the mouth of the cable duct. Connecting element 15 has substantially the same U-profile as cable duct 2, the connecting element 15 is of a slightly larger size. Connecting element 15 is arranged substantially around cable duct 2. Connecting element 15 is provided with clamping means 16 made up of a lip 16. The lip protrudes inward from the U-profile of connecting element 15. The lips are resilient. When cable duct 2 is arranged in connecting element 15, the lips 16 will move slightly inward in resilient manner and engage the edge 14 on the outside of cable duct 2 and herein exert a clamping force. With this lip 16 it is easy to arrange and clampingly engage a cable duct, since the lip will readily move inward in resilient manner. It is however considerably more difficult to remove the cable duct again, since the edge of the lip engages on the cable duct, wherein considerable friction occurs.

Cable duct 2 and connecting element 15 contain a conductive material, e.g. a metal. The lips 16 are conductive. The clamping force can be created by making use of the resilient properties of the metal.

The connection between the cable duct 2 and connecting element 15 is dependent on the clamping force exerted by lips 16 and the properties of the material, in particular the roughness or the friction which occurs when lips 16 are clamped on the outer surface of cable duct 2. By making use of metals the choice of clamping force can be so great that the friction is sufficient for secure construction of the connection to the cable duct.

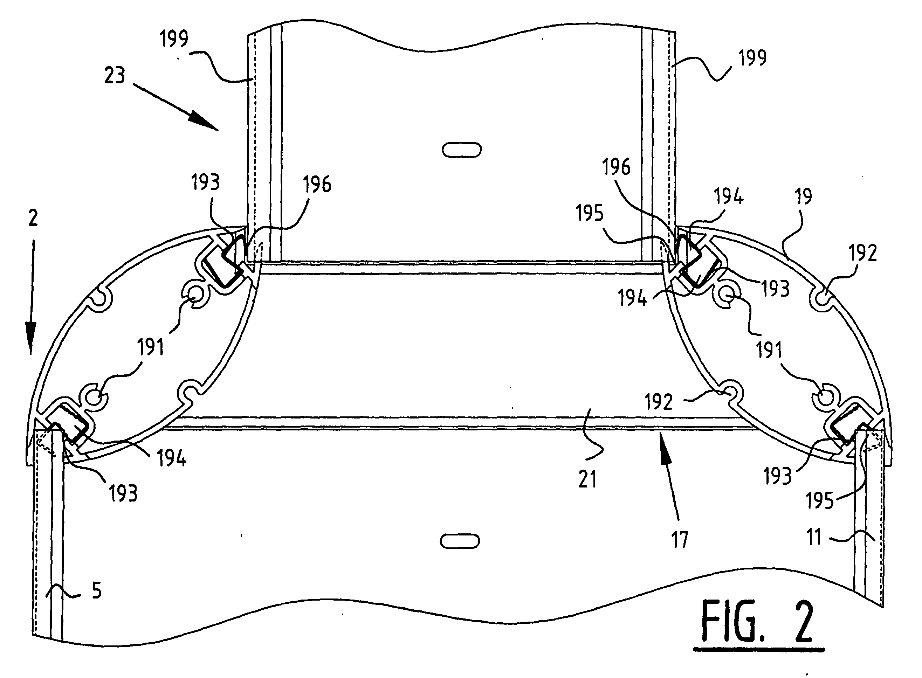

The other end of cable duct 2 has an edge 17. Cable duct 2 is engaged at the outer ends of side walls 11,5 by connecting element 18, in the form of a narrowing element. The narrowing element 18 is made up of two connecting parts 19, a cover 20, a base 21 and two hinges 22. The narrowing element 18 forms the transition from the wide U-shaped cable duct 2 to the smaller U-shaped cable duct 23, see figure 2. Figure 2 shows the top view of a narrowing element 18, without cover 20.

Connecting parts 19 are embodied with recesses 195 which are adapted to receive side wall 5,11,199 of a cable duct 2,23. When side wall 5,11,199 is inserted into the relevant recess in connecting part 19, the resilience of a lip 196 of a clamping spring 193 will have to be overcome. Clamping spring 193 clamps the side wall 5,11 in recess 195. Cable duct 2 is as it were extended with the narrowing element 18. Cable duct 23 is also connected to the narrowing element by means of clamping the side wall 199 in recess 195 of connecting part 19.

Connecting part 19 is formed by a pillow-shaped profile comprising two threaded channels 191, two longitudinal grooves 192, two chambers 194 and two recesses 195. Chamber 194 can receive a clamping spring 193. Protruding through base 21 are two screws (not shown) which engage in threaded channels 191. Hinges 22 may also be connected to the connecting part with screws.

Cable duct 23 is connected to connecting element 24 embodied as T-connection part with three mouths, which are each connected to cable ducts 23, 25 and 26. One mouth of connecting element 24 is closed with closing means 27.

The connecting parts 28 have the same pillow-shaped profile as connecting part 19, provided with a recess, in which the standing side wall of the U-shaped profile of cable duct 23, 25 and 26 can be received and can be engaged in clamping manner. The recess is also suitable for receiving a closing means 27. Closing means 27 can be removed, thus forming an open mouth of connecting element 24. The standing recess of the connecting element 24 can first of all receive an edge, which runs parallel to the plane of the mouth of the connecting element 24, such as closing means 27, and in addition can receive an edge which runs perpendicularly of the plane of the mouth of the connecting element 24, for instance side walls of a cable duct. Both the cable duct and the closing means 27 are received in the recess and engaged clampingly by the lip of the clamping spring.

Removal of closing means 27 and the arranging of a new cable duct element in this mouth demonstrates that the cable duct system according to the invention can be readily extended with additional cable ducts after assembly of the cable duct system for its first purpose. The cable duct system is thus very suitable for complicated cable duct systems such as those which can be used in the telecommunications industry, and can be extended in simple manner.

Cable duct 26 is provided with a cover device. Connected to the standing side walls of the U-shaped profile of cable duct 26 are four shaft parts 29. These can engage on clamps 31 connected to the edges of cover 30. Cover 30 can pivot in two ways. Two adjacent shaft parts, engaged clampingly by the respective clamping parts of the hinge, herein form the pivot axis of cover 30.

Cable duct 25 is connected to cable duct 32 by means of a connecting part 15. Cable duct 32 is constructed with a branch to a smaller cable duct 33. The cross-section of cable duct 33 is a quarter of the cable duct cross-section of cable duct 32.

In order to make a branch, an elevating part 34 is arranged in cable duct 32. The elevating part 34 is made up of two curved plates, two connecting parts, a bridge part 39, an auxiliary wall 40, two connecting elements 41, 42 provided with cover parts 43, 44 each having a shaft 45,46. Connecting elements 41 and 42 connect the edges of side wall 47 of cable duct 32 to the edges 48, 49 of duct 33.

Cables which can be easily damaged by bending are guided by the curved plates and two connecting parts. A difference in height is bridged in a smooth manner. Cable duct 32 is for instance 100x100 mm, while duct 33 is 50x50 mm. The difference in height which must be surmounted then amounts to 50 mm. Bridging of this difference in height is done with two curved plates, which engage on a longitudinal groove 50, 51 of the connecting parts. The curved plates are arranged in the longitudinal groove by a movement transverse to the duct 32.

The connecting part has a pillow-shaped profile, one side wall of which has an arc with a radius of 50 mm. The curved plate likewise has substantially an arcuate form with a radius of 50 mm. The bridge part 39 is situated at a height of 50 mm in cable duct 32.

The mouth of elevating part 34 receives the edge of cable duct 33. The recesses receive side walls 48,49. A depressed part has a space for receiving an edge which forms the base of the U-shaped profile of cable duct 33. The clamping means, here also formed by clamping springs (not shown), engage clampingly on the outside of cable ducts 32,33.

The connecting parts 41, 42 behave in similar manner to the above connecting parts 19. The auxiliary wall 40 enables a separation of the cables necessary for the branching and the cables which are not being branched. Screws connect auxiliary wall 40 to the standing surface of bridge part 39. The cables which are not being branched do not run over the elevation.

Cable duct 33 is connected to a connecting element 52 which is formed by a base 53, connected to four connecting parts 54 provided with cover parts 55. Connecting element 52 is embodied as T-junction. One of the mouths of the connecting element is closed with a closing means 56.

Connecting element 52 is connected to cable ducts 57, 58. Connecting parts 54 engage clampingly on the side walls of cable ducts 57, 58 machined in non-metal removing manner. The other end of cable duct 58 is engaged clampingly by connecting element 59 which corresponds to connecting element 15. Connecting element 59 has lips 591 which engage on the standing side walls of cable duct 58 and descending part 60. Connecting element 59 and lips 591 contain a metal providing a resilience and electrical conduction.

Descending part 60 enables a vertical cable duct. To this end the descending part 60 is assembled from a connecting part 63 and two corner pieces 61, 62, which have the same shape and are placed substantially vertically. The corner piece 62 has a flange with lip 64 which engages round the opposite corner piece 61. Screws 65 protrude through holes 611 of corner piece 61 and engage in threaded channels (not shown) in the pillow-shaped profile of connecting part 63. Corner piece 62 is connected in the same manner to connecting part 63.

Corner pieces 61, 62 are provided with a cover 66, 67. In the closed situation the covers are connected with two clamping parts 68 to two shaft parts 69. Clamping part 68 and shaft part 69 form a hinge. The covers can pivot around two axes. Access to the cable duct can be readily provided in this manner. Shaft part 69 is connected non-movably to the corner pieces 61,62, for instance by hooks protruding through portions punched out in the corner wall.

Connecting part 63, assembled in similar manner to connecting part 28, receives in its recesses an edge of the flange of corner pieces 61, 62 and engages these in clamping manner.

Cables in the cable duct system are guided over one side of the pillow-shaped profile of connecting part 63 and herein form a bend with a radius of 50 mm.

The shown cable duct system 1 is easy to use and can be used for different purposes. The cable duct system can be easily extended. The cable duct system is particularly suitable for receiving vulnerable cables, in particular unprotected glass fibre cables.

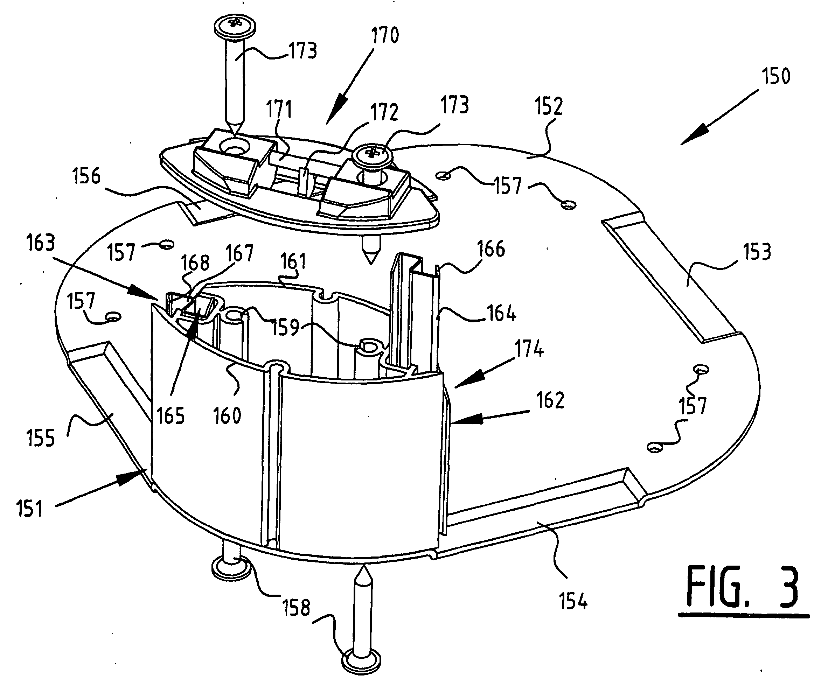

Fig. 3 shows a connecting element 150. Connecting element 150 can be used in cable duct systems to connect cable ducts. One side-wall 151 is shown in the form of a connecting part according to the invention. Connecting element 150 comprises a base plate 152 and a side wall 151. Base plate 152 is provided with four stamped parts 153-156, at a position where cable ducts can be placed, i.e. where the mouth of the connecting element is situated. The connecting element can connect a maximum of four cable ducts.

Base plate 152 is provided with eight bores 157 through which screws 158 can be inserted such that they engage on the threaded channel 159 of a connecting part/side wall 151. The screws connect a connecting part to base plate 152.

Connecting part 151 has a pillow-shaped profile which is formed by extrusion and which has in cross-section two sides 160, 161 in the form of an arcuate profile. Arcuate profile 161 can serve as guide means for a cable which is received in a cable duct system of which connecting element 150 forms part. A cable can be pulled out of a cable duct, which engages close to stamped part 154, to a cable duct which engages close to stamped part 155. The arcuate profile 161 serves as guide means having a determined minimum radius which is greater than the maximum bend that a fragile cable, such as an unprotected glass fibre cable, can make. An unprotected glass fibre cable can make a bend with a radius of 50 mm without damage. The arcuate profile 161 and arcuate profile 160 have a radius of a minimum of 50 mm.

Two recesses 162,163 are formed close to the ends of the profile of connecting part 151. Recesses 162, 163 are suitable for receiving a standing side wall of a U-shaped cable duct and are also suitable for receiving an edge of a closing means. The mouth of a U-shaped cable duct is received in recess 162, a corresponding parallel recess in a second connecting part and arranged in stamped part 154.

A clamping means 164 in the form of a clamping spring is arranged in the profile of connecting part 151. The profile has a chamber 165. The lip 166 of clamping spring 164 is suitable for clamping a standing side wall of a cable duct which is arranged close to stamped part 154. The lip herein 'cuts' into the side wall of the cable duct.

Clamping spring 167 is placed in chamber 165 and recess 163 such that it can clampingly engage a closing means. Lip 168 clamps on a closing means arranged along stamped part 155. The closing means extends parallel along the stamped part.

Clamping spring 164 can be taken out of chamber 165 and be re-placed so that a closing means placed parallel to stamped part 154 can also be clamped in recess 162.

The pillow-shaped profile 151 is covered on the top with a cap 170, which forms the shaft part of a hinge to which a cover for covering a connecting element 150 is fixed. The cap 170 has for this purpose a shaft 171 and a stop 172. The stop co-acts with the clamping part of the hinge (not shown), which engages on shaft 171 such that an opened position for the cover is defined. The cap 170 is connected to connecting part 151 with screws 173 which engage in threaded channels 159. The cover pivots for instance around a shaft 171, but also around another shaft which is arranged on a connecting part arranged on the opposite side of the connecting part.

Recess 162 is a longitudinal groove in which the standing edge of a U-shaped cable duct can be received and engaged by the lip 166 of clamping spring 164. Close to the upper end of the longitudinal groove a piece 174 of the pillow-shaped profile 151 has been removed. Piece 174 forms part of inner wall 161. This permits a protective edge to be arranged on the upper side of the standing wall of a cable duct to be engaged, which edge protrudes inward.

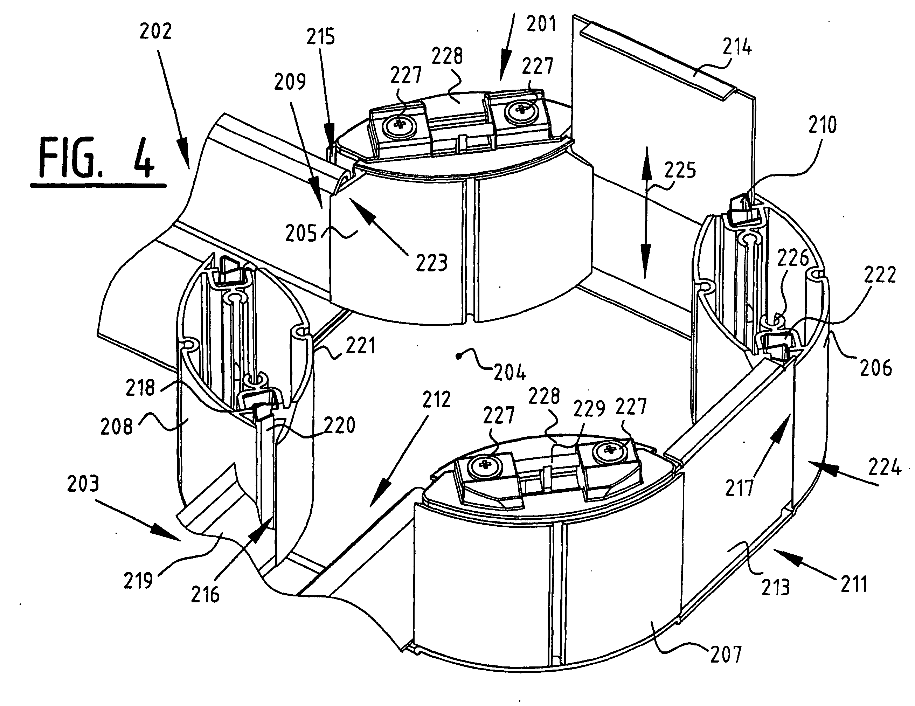

Figure 4 shows a connecting element 201 and two cable ducts 202 and 203. Connecting element 201 connects cable duct 202 to cable duct 203 at an angle of 90°. Through their embodiment the cable ducts 202,203 and connecting element 201 are suitable as holders for receiving and carrying cables.

The housing of connecting element 201 comprises a base 204 and four side walls 205, 206, 207, 208. The side walls are connected in suitable manner by a screw connection, or a slide and click system.

The connecting element 201 comprises four mouths 209-212. The base, base plate 204 has stamped parts close to mouths 209-212. The stamped part is clearly visible close to mouth 211. Mouth 209 and 212 (shown partly cut-away) receive cable duct 202 respectively 203. Mouth 211 is provided with a closing means 213, mouth 210 is provided with closing means 214.

The side walls 205-208 are embodied in each case as a pillow-shaped aluminium profile. On the outer end of the pillow-shaped profile the side wall has a recess in which an edge can be received. The edge of cable duct 202 and 203 is arranged and received in recess 215 and 216. An edge for the closing means 213 is arranged and received in recess 217. In this embodiment the recesses are suitable in each case for receiving an edge which extends perpendicularly of the base and wherein the edge either runs parallel with the plane of a mouth, such as recess 217 shows, or perpendicular to the plane of the mouth such as recess 216 and 215 show.

The edge 219 of side wall 208, all edges of side walls 205-208 are given a round finish, so that pulling of cables along these edges will not result in damage.

Side walls 205-208 have a pillow-shaped profile. A cable which can be received in the holder of connecting element 201 and cable ducts 202 and 203 is guided round the bend along side wall 208. Side wall 208 forms a guide means, whereof the side 221 facing toward the connecting element ensures a uniform progress in the bend. There occur no angular locations by which a cable can be damaged. The side 221 has substantially an arcuate angle of a circle form. The radius of this circle is at least 50 mm. Unprotected glass fibre cables can be guided round bends with a radius of 50 mm. without being damaged herein.

Recesses 215-217 are suitable for engaging a cable duct as well as a closing means. The edge of the cable duct is placed in the recess and moved counter to the resistance of clamping means 218. Clamping means 218 is a clamping spring 218. Clamping spring 218 engages clampingly on the outside of the standing side wall 219 of the cable duct (partly cut-away in the drawing) and pushes the cable duct clampingly into the longitudinal groove formed by recess 216 of side wall 208. The same applies for the other cable duct edges.

Clamping means 218 is a clamping spring profile which is received in the profile of side wall 205-208. The lip 220 of clamping spring 218 moves resiliently inward when cable duct 203 is arranged in recess 216. Clamping spring 218 is preferably embodied as a metal profile. The metal lip 220 engages on the metal cable duct 203 such that a considerable friction force prevents release of the cable duct edge from the recess. Lip 220 cuts as it were into the standing side wall of the arranged cable duct 203.

The metal embodiment of the respective elements causes the connecting element to engage the engaged cable ducts in conductive manner and thus connects them electrically. The closing element is preferably also of metal and hence electrically conductive. This latter is particularly required when the connecting element connects two cable ducts lying mutually in line and two opposite mouths are closed with a closing means (not shown).

The cable ducts 202 and 203 are engaged on the outside close to their outer end. The outer end of cable duct 202 and 203 is free of special engaging means. The outer end is machined in non-metal removing manner. The edges of closing means 213 and 214 are received in recesses 217 of the side walls. A clamping means 222 (clamping spring) presses the closing means 213 clampingly against the edge 224 of side wall 206. The other edges of the closing means are clamped in similar manner.

Clamping means 222 has the same profile as clamping means 218. Closing means 214 can only move according to arrow 225. Connecting element 201 is adapted as bend, although the removal of a closing means 213 and/or 214 creates a connecting element in the form of a T-/cross-shape. The connecting element which is initially inserted as a bend in the cable duct system can later be extended with additional connections to cable ducts by removing closing means 213 and 214. This fits in particularly well with the current trend of very complicated cable duct systems in the telecommunications industry, which regularly have to be extended at a later time.

The profile of side walls 205-208 has two threaded holes 226. A screw 227 can be received herein. Using screw 227 a cap 228 can be arranged on the profile. Cap 228 can suitably be adapted as hinge for a possible cover on the connecting element. Cap 228 forms the shaft part of a hinge and has for this purpose a shaft 229 on which a clamp of a cover can engage pivotally.

It can be seen that close to recess 209 the inner wall of side wall 205 is partially removed. This is necessary for the purpose of receiving the folded-over upper edge 223 of cable duct 202 in the recess.

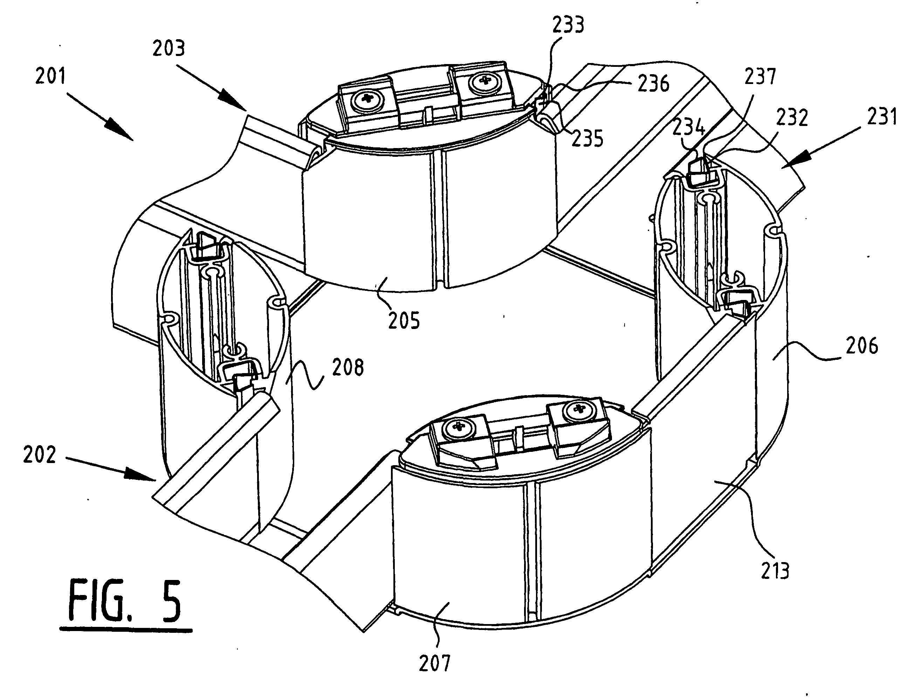

Figure 5 shows the connecting element 201 in an embodiment as T-shaped connecting element. Connecting element 201 is connected to cable ducts 202, 203 and 231. Closing means 213 is also shown. The edges of cable ducts 202, 203, 231 and closing element 213 are received in the recesses of side walls 205-208. The connecting element 201 is the same as the connecting element according to figure 4. The only difference with figure 4 is that clamping springs 232 and 233, which in figure 4 engage on closing means 214, now engage on the edge of cable duct 231. The lip 234, 235 of clamping spring 232, 233 engages close to the end of cable duct 231. In figure 4 the lip 234, 235 of clamping spring 232, 233 engages on closing means 214.

In order to adapt a bend element of figure 4 after initial manufacture of a cable duct system and to change it into a T-shaped element as according to figure 5, it is necessary to remove closing means 214 by a movement according to arrow 225 out of the recess of side walls 205,206. Cable duct 231 is subsequently arranged in recesses 238 of the side wall profile, wherein the resistance of clamping spring 232, 233 is overcome. Cable duct 231 then connects onto connecting element 201, whereby an existing cable duct system can be extended in very efficient manner.

Cables can now be arranged in the holder formed by cable ducts 202, 203, 231 and connecting element 201. The cables can negotiate a bend from cable duct 203 to cable duct 202, a bend from cable duct 202 to cable duct 231, or can be guided straight on from cable duct 203 to cable duct 231. When they pass through the bend, side walls 205 and 208 form a guide means which provides a uniform progress of the bend with a determined minimum radius of the circular arc which is formed. This prevents the possibility of damage occurring when cables are pulled through the cable duct system, particularly in the case of unprotected glass fibre cables.

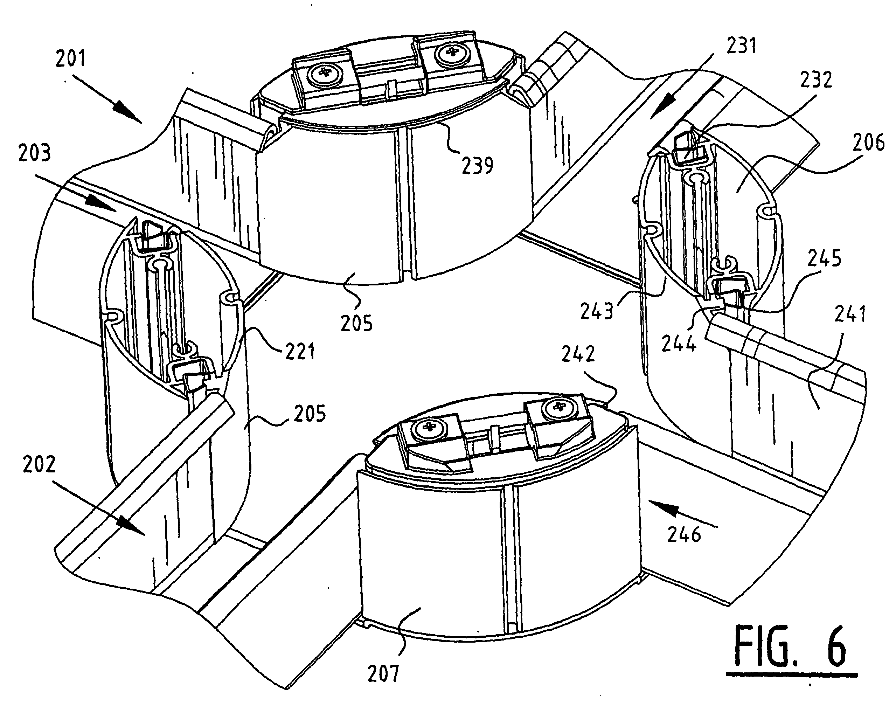

Figure 6 shows a cross-shaped connecting element 210, wherein the closing means 213 (figure 4/5) is replaced by a cable duct 241. Each of the edges of cable duct 202, 203, 231, 241 is now engaged in the recess of the side walls and clamped by a clamping spring 218,232,245. Each of the pillow-shaped profiles of side walls 205-208 forms a guide means which provides a non-angular guiding of a vulnerable glass fibre cable. A cable is guided round a bend along sides 239,243,242,221 of respective side walls 205-208. The side walls 205-208 also allow for electrical conduction. All cable ducts are connected in electrically conducting manner. The whole cable duct system is electrically conductive when embodied with such connecting elements.

A standing side of cable duct 241 is received in recess 244 of side wall 206 and engaged clampingly by clamping spring 245, when cable duct 241 is arranged in the mouth of the connecting element as according to arrow 246. The same applies to the opposite edge, which is received in side wall 207 and herein engaged clampingly.

## Claims

1. Connecting element (201) for cable ducts, comprising a housing with a base (204), at least two side walls (205-208) upstanding from the base (204) such that at least one holder and at least two mouths (209-212) are formed, wherein the holder is suitable for receiving cables, and close to each mouth (209-212) the connecting element (201) also comprises engaging means (164,167,218,222;162,163,215-217) which are adapted to engage on a cable duct, **characterized in that** the engaging means (169,167,218,222;162,163,215-217) are also adapted to engage on a closing means (213-214) for closing the mouth (209-212).

2. Connecting element (201) as claimed in claim 1, **characterized in that** the connecting element (201) has at least two mouth surfaces, wherein the mouth surfaces form a mutual angle.

3. Connecting element (201) as claimed in claim 1 or 2, **characterized in that** the connecting element comprises four standing side walls (205-208) and four mouths (209-212).

4. Connecting element (201) as claimed in any of the foregoing claims 1-3, **characterized in that** the engaging means (222) is adapted for receiving a closing element (213).

5. Connecting element (201) as claimed in any of the foregoing claims, **characterized in that** the engaging means (164,167,218,222;162,163,215-217) comprise clamping means (169,167,218,222).

6. Connecting element (201) as claimed in any of the foregoing claims, **characterized in that** the engaging means (164,167,218,222;162,163,215-217) comprises a recess (162, 163, 215-217).

7. Connecting element (201) as claimed in any of the foregoing claims, **characterized in that** the engaging means (215-217) are adapted to engage a cable duct (202,203) close to an edge (219), wherein the cable duct (202,203) is substantially free of engaging means.

8. Connecting element as claimed in any of the foregoing claims, **characterized in that** the engaging means (215-217) are adapted to engage a cable duct (202,203) which has been machined in non-metal removing manner.

9. Connecting element as claimed in any of the foregoing claims, **characterized in that** the connecting element (201) comprises guide means (221) for guiding cables in a determined bend.

10. Connecting element as claimed in claim 9, **characterized in that** the guide means (221) have a determined minimum outer circumference which depends on the fragility of a received cable.

11. Connecting element as claimed in any of the foregoing claims, **characterized in that** the engaging means (215-217) are electrically conducting close to the respective mouths of the connecting element.

12. Connecting element as claimed in any of the foregoing claims, **characterized in that** the connecting element is injection moulded.

13. Connecting element as claimed in any of the claims 1-11, **characterized in that** the standing side wall (205-208) is formed by a pillow-shaped extrusion profile (205-208).

14. Connecting element as claimed in any of the foregoing claims, **characterized in that** the connecting element is provided with a cover (20).

15. Connecting element as claimed in claim 14, **characterized in that** the cover (20) comprises at least two shafts (229) and two clamping means, wherein the shafts (229) are arranged on two opposite side walls (205-207) of the connecting element, so that the cover (120) can pivot about at least two axes, and can swing to at least two sides.

## Patentansprüche

1. Verbindungsteil (201) für Kabelkanäle, umfassend ein Gehäuse mit einem Unterbau (204), wenigstens zwei Seitenwände (205-208), die von dem Unterbau (204) derart aufrecht stehen, daß wenigstens ein Halter und wenigstens zwei Öffnungen (209-212) ausgebildet sind, wobei der Halter zur Aufnahme von Kabeln geeignet ist und das Verbindungsteil (201) nahe jeder Öffnung (209-212) auch Eingriffsmittel (164, 167, 218, 222; 162, 163, 215-217) umfaßt, die ausgelegt sind zum Eingriff an einem Kabelkanal, **dadurch gekennzeichnet, daß** die Eingriffsmittel (164, 167, 218, 222; 162, 163, 215-217) auch ausgelegt sind, um an einem Schließteil (213-214) anzugreifen, um die Öffnung (209-212) zu schließen.

2. Verbindungsteil (201) nach Anspruch 1, **dadurch gekennzeichnet, daß** das Verbindungsteil (201) wenigstens zwei öffnungsoberflächen hat, wobei die Öffnungsoberflächen einen Winkel zueinander bilden.

3. Verbindungsteil (201) nach Anspruch 1 oder 2, **dadurch gekennzeichnet, daß** das Verbindungsteil vier aufrecht stehende Seitenwände (205, 208) und vier Öffnungen (209-212) umfaßt.

4. Verbindungsteil (201) nach einem der vorstehenden Ansprüche 1-3, **dadurch gekennzeichnet, daß** das Eingriffsmittel (222) ausgelegt ist zur Aufnahme eines Schließteils (213).

5. Verbindungsteil (201) nach einem der vorstehenden Ansprüche, **dadurch gekennzeichnet, daß** die Eingriffsmittel (164, 167, 218, 222; 162, 163, 215-217) Klemmmittel (164, 167, 218, 222) umfassen.

6. Verbindungsteil (201) nach einem der vorstehenden Ansprüche, **dadurch gekennzeichnet, daß** das Eingriffsmittel (164, 167, 218, 222; 162, 163, 215-217) eine Ausnehmung (162, 163, 215-217) umfaßt.

7. Verbindungsteil (201) nach einem der vorstehenden Ansprüche, **dadurch gekennzeichnet, daß** die Eingriffsmittel (215-217) ausgelegt sind zum Eingriff mit einem Kabelkanal (202, 203) nahe einem Rand (219), wobei der Kabelkanal (202, 203) im wesentlichen frei von Eingriffsmitteln ist.

8. Verbindungsteil nach einem der vorstehenden Ansprüche, **dadurch gekennzeichnet, daß** die Eingriffsmittel (215-217) ausgelegt sind zum Eingriff mit einem Kabelkanal (202, 203), der in nicht Metall entfernender Weise bearbeitet wurde.

9. Verbindungsteil nach einem der vorstehenden Ansprüche, **dadurch gekennzeichnet, daß** das Verbindungsteil (201) Führungsmittel (221) umfaßt zum Führen von Kabeln mit einer vorbestimmten Biegung.

10. Verbindungselement nach Anspruch 9, **dadurch gekennzeichnet, daß** die Führungsmittel (221) einen vorbestimmten minimalen Außenumfang haben, der von der Brüchigkeit eines aufgenommenen Kabels abhängt.

11. Verbindungsteil nach einem der vorstehenden Ansprüche, - **dadurch gekennzeichnet, daß** die Eingriffsmittel (215-217) in der Nähe der entsprechenden Öffnungen des Verbindungsteils elektriach leitend sind.

12. Verbindungsteil nach einem der vorstehenden Ansprüche, **dadurch gekennzeichnet, daß** das Verbindungsteil spritzgegossen ist.

13. Verbindungsteil nach einem der Ansprüche 1-11, **dadurch gekennzeichnet, daß** die aufrecht stehende Seitenwand (205-208) durch ein kissenförmiges Extrusionsprofil (205-208) ausgebildet ist.

14. Verbindungsteil nach einem der vorstehenden Ansprüche, **dadurch gekennzeichnet, daß** das Verbindungsteil mit einer Abdeckung (20) versehen ist.

15. Verbindungsteil nach Anspruch 14, **dadurch gekennzeichnet, daß** die Abdeckung (20) wenigstens zwei Schäfte (229) und zwei Klemmmittel umfaßt, wobei die Schäfte (229) an zwei gegenüberliegenden Seitenwänden (205-207) des Verbindungsteils angeordnet sind, so daß die Abdeckung (120) um wenigstens zwei Achsen schwenken kann und auf wenigstens zwei seiten schwingen kann.

## Revendications

1. Elément de connexion (201) pour des conduits de câbles, comportant un boîtier muni d'une base (204), au moins deux parois latérales (205 à 208) faisant saillie à partir de la base (204) de telle sorte qu'au moins un support et au moins deux embouchures (209 à 212) sont formés, le support étant adapté pour recevoir des câbles, et à proximité de chaque embouchure (209 à 212), l'élément de connexion (201) comporte également des moyens de mise en prise (164, 167, 218, 222 ; 162, 163, 215 à 217) qui sont adaptés pour venir en prise sur un conduit de câbles, **caractérisé en ce que** les moyens de mise en prise (164, 167, 218, 222 ; 162, 163, 215 à 217) sont également adaptés pour venir en prise sur des moyens de fermeture (213 et 214) destinés à fermer l'embouchure (209 à 212).

2. Elément de connexion (201) selon la revendication 1, **caractérisé en ce que** l'élément de connexion (201) a au moins deux surfaces d'embouchure, les surfaces d'embouchure formant un angle mutuel.

3. Elément de connexion (201) selon la revendication 1 ou 2, **caractérisé en ce que** l'élément de connexion comporte quatre parois latérales en saillie (205 à 208) et quatre embouchures (209 à 212).

4. Elément de connexion (201) selon l'une quelconque des revendications 1 à 3, **caractérisé en ce que** les moyens de mise en prise (222) sont adaptés pour recevoir un élément de fermeture (213).

5. Elément de connexion (201) selon l'une quelconque des revendications précédentes, **caractérisé en ce que** les moyens de mise en prise (164, 167, 218, 222 ; 162, 163, 215 à 217) comportent des moyens de serrage (164, 167, 218, 222).

6. Elément de connexion (201) selon l'une quelconque des revendications précédentes, **caractérisé en ce que** les moyens de mise en prise (164, 167, 218, 222 ; 162, 163, 215 à 217) comportent un évidement (162, 163, 215 à 217).

7. Elément de connexion (201) selon l'une quelconque des revendications précédentes, **caractérisé en ce que** les moyens de mise en prise (215 à 217) sont adaptés pour venir en prise avec un conduit de câbles (202, 203) à proximité d'un bord (219), le conduit de câbles (202, 203) étant sensiblement exempt de moyens de mise en prise.

8. Elément de connexion selon l'une quelconque des revendications précédentes, **caractérisé en ce que** les moyens de mise en prise (215 à 217) sont adaptés pour venir en prise avec un conduit de câbles (202, 203) qui a été usiné d'une manière sans enlever de métal.

9. Elément de connexion selon l'une quelconque des revendications précédentes, **caractérisé en ce que** l'élément de connexion (201) comporte des moyens de guidage (221) pour guider des câbles dans une courbe déterminée.

10. Elément de connexion selon la revendication 9, **caractérisé en ce que** les moyens de guidage (221) ont une circonférence extérieure minimum déterminée qui dépend de la fragilité d'un câble reçu.

11. Elément de connexion selon l'une quelconque des revendications précédentes, **caractérisé en ce que** les moyens de mise en prise (215 à 217) sont électriquement conducteurs à proximité des embouchures respectives de l'élément de connexion.

12. Elément de connexion selon l'une quelconque des revendications précédentes, **caractérisé en ce que** l'élément de connexion est moulé par injection.

13. Elément de connexion selon l'une quelconque des revendications 1 à 11, **caractérisé en ce que** la paroi latérale en saillie (205 à 208) est formée par un profilé d'extrusion en forme de coussin (205 à 208).

14. Elément de connexion selon l'une quelconque des revendications précédentes, **caractérisé en ce que** l'élément de connexion est muni d'un couvercle (20).

15. Elément de connexion selon la revendication 14, **caractérisé en ce que** le couvercle (20) comporte au moins deux arbres (229) et deux moyens de serrage, les arbres (229) étant agencés sur deux parois latérales opposées (205 à 207) de l'élément de connexion, de sorte que le couvercle (120) peut pivoter autour d'au moins deux axes, et peut basculer vers au moins deux côtés.
